# EUROPEAN PATENT SPECIFICATION

(11) **EP 3 157 872 B1**
(45) Date of publication and mention of the grant of the patent: **03.01.2018**
(21) Application number: 15725367.5
(22) Date of filing: 01.06.2015
(51) Int. Cl.: C01G 49/00, C02F 1/28, C01G 3/00, C01G 9/00, C02F 101/10, C02F 101/20, B01J 20/04, B01J 20/06, B01J 20/08, B01J 20/10, B01J 20/14, B01J 20/20, B01J 20/30, B01J 20/28

(54) **LAYERED DOUBLE HYDROXIDES FOR PURIFICATION OF WATER**
GESCHICHTETE DOPPELHYDROXIDE ZUR REINIGUNG VON WASSER
HYDROXYDES DOUBLES LAMELLAIRES POUR LA PURIFICATION DE L'EAU

(30) Priority: 18.06.2014 EP 14172893
(43) Date of publication of application: 26.04.2017
(73) Proprietor: Unilever NV, 3013 AL Rotterdam (NL); Unilever PLC, London, Greater London EC4Y 0DY (GB)
(72) Inventor: MAHAPATRA, Samiran, Bangalore 560066 (IN); SARKAR, Ayan, Bangalore 560066 (IN); TENDULKAR, Mahesh Subhash, Bangalore 560066 (IN); RAJANARAYANA, Venkataraghavan, Bangalore 560066 (IN)
(74) Representative: Reijns, Tiemen Geert Pieter
(86) International application number: PCT/EP2015/062094
(87) International publication number: WO 2015/193087

(56) References cited:
- EP-A1- 0 566 260
- WO-A1-2009/010376
- US-A1- 2006 070 952
- LI YANG ET AL: "Adsorption of Arsenic on Layered Double Hydroxides: Effect of the Particle Size", INDUSTRIAL & ENGINEERING CHEMISTRY RESEARCH, vol. 45, no. 13, 17 May 2006 (2006-05-17), pages 4742-4751, XP055160656, ISSN: 0888-5885, DOI: 10.1021/ie051457q
- LI YANG ET AL: "Removal of Trace Levels of Arsenic and Selenium from Aqueous Solutions by Calcined and Uncalcined Layered Double Hydroxides (LDH)", INDUSTRIAL & ENGINEERING CHEMISTRY RESEARCH, vol. 44, no. 17, 9 July 2005 (2005-07-09), pages 6804-6815, XP055041429, ISSN: 0888-5885, DOI: 10.1021/ie049060u cited in the application

## Description

### Field of the invention

The invention relates to layered double hydroxides, method for synthesis and use thereof for purification of water.

### Background of the invention

Layered double hydroxides (abbreviated as LDH) represent a class of minerals, one of which is hydrotalcite having chemical formula Mg₆Al₂(CO₃)(OH)₁₆ 4H₂O.

Hydrotalcite is generally used for purification of water contaminated with Arsenic. Reference to such use is found for example, in Ind. Eng Chem. Res. 2005, 44, pp. 6804 - 6815*.* Some reference books, encyclopedia and articles relating to inorganic chemistry and water purification indicate that modified hydrotalcite containing other bivalent and trivalent cations are better at purification of water than the natural form.

It is the limited utility of natural hydrotalcite against Arsenic which led to development of modified forms of LDH.

WO2009010376 A1 (Unilever) discloses a composition for purification of water having a first component which is layered double hydroxide of the formula (M₁²⁺.M₂²⁺)ₓ(M₃³⁺.M₄³⁺)_{y}(OH)_{2x+2y}(A^{z-})_{y/z}. nH₂O, where, M₁²⁺ and M₂²⁺ are divalent ions of magnesium, zinc or copper, wherein at least one of the divalent cations are Zn or Cu, and M₃³⁺ and M₄³⁺ are trivalent cations selected from aluminium or iron, A is an anion selected from OH⁻, CO₃²⁻, Cl⁻, NO₃⁻, SO₄⁻, PO₄³⁻, Fe(CN)₆⁴⁻ and x is from 0.1 to 10.0, y is from 0.1 to 5.0, n is between 0 and 10.0, z is from 1.0 to 4.0, and the mole ratio of M₁²⁺: M₂²⁺ is from 0 to 1 and the mole ratio of M₃³⁺:M₄³⁺ is from 0 to 1; and a second component which is selected from a flocculating agent or a coagulating agent

Though the material disclosed in this application is useful for purification of water containing Arsenic, it has limited capacity to adsorb/absorb Arsenic. This makes it imperative to use more of this material for effective purification of water.

### Summary of the invention

It has been determined that granulation of modified LDH material can not only significantly enhance its lifetime but also keep the residual metal content of purified water low. Such granulated material is found to be equally effective in combination with other filter materials like activated carbon, thereby making it an effective and efficient medium of purification of water.

In a first aspect is disclosed a layered double hydroxide of the general formula [(M²⁺)₁₋ₓ(M³⁺)ₓ(OH)₂]^{x+}(Aⁿ⁻)_{x/n}·mH₂O, where, M²⁺ is Zn²⁺, Cu²⁺, Fe²⁺ or Ca²⁺; M³⁺ is Al³⁺ or Fe³⁺ and Aⁿ⁻ is CO₃²⁻, OH⁻, Cl⁻, NO₃⁻, SO₄²⁻ or PO4³⁻, "x" is in the range of 0.05 to 0.5, "n" is in the range of 1 to 10, and "m" is in the range of 0 to 10; wherein said layered double hydroxide is granular having particle size in the range of 50 µm to 2000 µm and wherein molar ratio of M²⁺: M³⁺ is in the range of 2:1 to 4:1.

In a second aspect is disclosed a composition of filter media for purification of water, said composition comprising a first filter medium of the first aspect and a second filter medium which is activated carbon, sand, diatomaceous earth, calcium carbonate, activated alumina, ferric oxide or titanium oxide.

In a third aspect is disclosed a method for making a layered double hydroxides of the first aspect comprising the steps of:
(i) mixing, in any order, an acidic solution of a compound comprising at least one of Zn²⁺, Cu²⁺, Fe²⁺ or Ca²⁺ with an acidic solution of compound comprising at least one of Al³⁺ or Fe³⁺ and an alkaline solution comprising at least one of CO₃²⁻, OH⁻, Cl⁻, NO₃-, SO4² or PO₄³⁻ to form a precipitate;
(ii) filtering said precipitate;
(iii) washing said precipitate with water to get a layered double hydroxide as shown in the general formula as in the first aspect;
(iv) granulating said layered double hydroxide; and,
(v) separating granules of particle size in the range of 50 µm to 2000 µm from finer particles.

In a fourth aspect is disclosed use of a layered double hydroxide of the first aspect to reduce Arsenic content of impure water from 300 ppb to ≤10 ppb.

Details of various aspects of the invention will now be explained.

### Detailed description of the invention

### The modified LDH material

Disclosed layered double hydroxide has the general formula [(M²⁺)₁₋ₓ(M³⁺)ₓ(OH)₂]^{x+}(Aⁿ⁻)_{x/n}·mH₂O, where, M²⁺ is Zn²⁺, Cu²⁺, Fe²⁺ or Ca²⁺; M³⁺ is Al³⁺ or Fe³⁺ and Aⁿ⁻ is CO₃²⁻, OH⁻, Cl⁻, NO₃⁻, SO₄²⁻ or PO4³⁻, "x" is in the range of 0.05 to 0.5, "n" is in the range of 1 to 10, and "m" is in the range of 0 to 10; wherein said layered double hydroxide is granular having particle size in the range of 50 µm to 2000 µm and wherein molar ratio of M²⁺: M³⁺ is in the range of 2:1 to 4:1.

There is no particular preference between Fe³⁺ and Al³⁺ as the M³⁺. As far as the M²⁺ are concerned, Zn²⁺, Cu²⁺ and Fe²⁺ are more preferred.

In preferred embodiments, "x" is in the range of 0.1 to 0.4; "n" is in the range of 1 to 4 and "m" is in the range of 0 to 6. The term "m" represents water of crystallization therefore they may or may not be such water of crystallization in the modified LDH material.

Thus, the modified LDH material has one divalent cation and one trivalent cation. The preferred modified LDH compounds have the following combination of cations - Cu-AI, Zn-AI, Zn-Fe and Cu-Fe.

The more preferred anions A are OH⁻, Cl⁻, NO₃⁻ and CO₃²⁻. The modified LDH material can also be in their calcined forms. Such forms do not have water of crystallisation.

### Particle size

Particle size of the modified LDH material disclosed herein is in the range of 50 µm to 2000 µm and more preferably in the range of 200 µm to 1500 µm.

As indicated earlier, some LDH materials, in particular natural LDH material, are less fit for purification inspite of their ability to absorb/adsorb Arsenic because the materials leach ions like calcium and aluminium thereby leaving behind significant amount of such metals in purified water. We found that this problem is solved by having particle size of the modified material in the range of 50 µm to 2000 µm.

### Method of making modified LDH

LDH materials are generally prepared as follows:

Salts of the bivalent and trivalent metal ions in desired molar ratio are dissolved in water.The salt solution is heated to 85 to 105 °C preferably from 90 to 95 °C. In a separate vessel, an alkali solution is prepared. Suitable alkalis include alkali metal carbonate, bicarbonate or hydroxide or compounds like ammonia or urea. The alkali solution is also heated preferably in the range of 80 to 105 °C, more preferably in the range of 90 to 95 °C. At this high temperature, the salt solution and the alkali solution are added to a third vessel simultaneously and under vigorous stirring. During the addition, the temperature of the solution is maintained preferably around 90 to 95 °C. LDH materials get formed during this reaction and precipitate out of the solution. After complete precipitation, the temperature of the solution is usually maintained for minimum 15 minutes. The precipitate is then washed to free it of dissolved salts, filtered, preferably under vacuum, and dried. Calcined forms are preferably prepared by heating the LDH materials to 400 °C or higher.

In accordance with a second aspect, disclosed is a method for making layered double hydroxides of the first aspect, comprising the steps of:
(i) mixing, in any order, an acidic solution of a compound comprising at least one of the bivalent cation Zn²⁺, Cu²⁺, Fe²⁺ or Ca² with an acidic solution of compound comprising at least one of the trivalent cation Al³⁺ or Fe³⁺ with an alkaline solution comprising at least one of the anionic species selected from CO₃²⁻, OH⁻, Cl⁻, NO₃⁻, SO4² or PO₄³⁻;
(ii) filtering the resulting precipate; and,
(iii) washing the precipitate with water.

Although the modified LDH material is preferably prepared by following the standard instantaneous co-precipitation method as disclosed, the modified LDH material may also be prepared using other methods such as co-precipitation method, ion-exchange method, calcination-rehydration process or hydrothermal method.

### Granulation

The disclosed layered double hydroxide is in the form of granules of particle size in the range of 50 µm to 2000 µm. Natural and synthetic LDH material is powdery which is found to leach some part of the divalent and/or trivalent cations beyond the maximum contaminant level (MCL) for drinking water. The US-EPA prescribes the following values - Zinc: 5 ppm, Copper: 1 ppm, Iron (II): 0.3 ppm (300 ppb), Calcium: N/A as it is considered one of the primary water components; concentration influenced by local rock types, Aluminium: 0.2 ppm (200 ppb) and Iron (III): 0.3 ppm (300 ppb).

The modified LDH can be granulated by any standard granulation technique ranging from, but not limited to, dry compaction and wet granulation processes. Dry compaction routes include a non-exhaustive list of use of any compaction machine such as tablet press, roll compactor, chilsonator, their combinations, while wet granulation techniques include a non-exhaustive list of use of any wet shearing machines such as rapid mixer granulator, plough shear mixer, planetary mixer or their combinations.

For wet granulation, water or any solvent could be used as binder, which could be incorporated at the time of granulation and then evaporated before the material is actually used. The modified LDH material nay be granulated after some processing steps that modify the size and shape of the granules/powder. Modified LDH having Zn-Al can be granulated or compacted by itself or in combination with granulating agents such as binders, additives, inert material, fillers, plasticizers, disintegrant or combinations of such materials to produce a granule suitable for the application. Further, the granulating agents can be amongst non-standard materials like minerals, salts, polymers or any organic compounds or combinations thereof. Other methods of granulating the material in discussion can be by fluidised bed granulation, melt granulation, spray granulation, spheronization or pelletization techniques or their combinations which can be achieved by use of standard granulating machines and equipments along with but not necessarily, the use of granulation aids. The above are all probable routes / techniques for granulating the modifed LDH material, but the preferred technique is to use dry compaction without any binder.

### Use of the modified LDH material

Arsenic is one of the most toxic contaminants found in the environment. Arsenic is found in soils, rocks, natural waters and organisms. Arsenic is the twentieth most abundant element in earth's crust. The most common oxidation states of arsenic are + 3 and +5. Among all the arsenic compounds present in the environment, of particular interest is arsenite (which is Arsenic in the As (III) form, which is 25 to 50 times more toxic than arsenate (which is Arsenic in As (V) form) and 70 times more toxic than the methylated species, dimethylarsinate (DMA) and monomethylarsonate(MMA). These facts indicate why it is of priority interest to develop technologies for the removal of As (III), from drinking water.

Inorganic arsenic is identified as a group-I carcinogen for humans. More than 100 million people are affected worldwide due to arsenic contaminated drinking water. Drinking water in many of these areas has arsenic content as high as 300 parts per billion (ppb). The WHO and USEPA recommended MCL (maximum contaminant level) of arsenic in drinking water is 10 ppb. Available arsenic removal technologies are membrane separation, ion exchange and adsorption. These technologies either require expensive equipments which are not affordable in many parts of the world or are not successful in removing Arsenic, especially in the As (III) to the WHO recommended specification. Further, boiling of water, which many people resort to for purification of water, does not remove Arsenic. Thus, one of the major challenges in this field is poor removal of arsenic (III).

It is preferred that the layered double hydroxide has Arsenic (V) adsorption capacity of at least 5 mg/g.

Therefore in a further aspect is disclosed the use of a layered double hydroxide of the first aspect to reduce Arsenic content of impure water from 300 ppb to ≤10 ppb.

### Composition of filter media

In accordance with a third aspect is disclosed a composition of filter media for purifying water containing Arsenic, the composition having a first filter medium of the first aspect and a second filter medium which is activated carbon, sand, diatomaceous earth, activated alumina, ferric oxide or titanium oxide. Preferably the composition of filter media has 5 to 100%, more preferably 20 to 100% of the first filter medium, and even more preferably 20 to 50 % of the filter medium, the balance being said second filter medium. In a preferred embodiment, the composition further includes a binder and the content of the binder could be varied depending on its nature and the proportion of first and second filter media.

The filter media composition can be used either in loose or bound form. The filter shape of bound forms can be of any relevant geometrical form (plate, sphere, partial spheres, cylindrical etc.) or even a distorted form.

Thus in accordance with a further aspect is disclosed use of the composition of filter media to reduce Arsenic content of impure water from 300 ppb to ≤10 ppb.

### Examples

The invention will now be explained in further details by non-limiting examples.

### Example 1: Synthesis of preferred embodiment of modified LDH

A modified LDH material was prepared by co-precipitation route as described hereinafter.

An aqueous solution of Zinc chloride was mixed with an aqueous solution Aluminium chloride such that Zn:AI molar ratio was 3:1. This was mixed with 1.5 molar sodium carbonate solution to precipitate the modified LDH. The precipitate was filtered and washed with water. Its formula was Zn₆Al₂(OH)₁₆(CO₃).4H₂O and its Arsenic removal capacity was at least 9 mg/g.

100 kg of fine powder of the modified LDH material was compacted in a roll compactor at 250 kg/cm² and resultant chips were passed through oscillating granulator through a sieve of 1.2 mm at 30 Hz. The output was sieved through a 200 µm sieve to obtain granules in the size range of 200 to 1200 µm. The granular material was used for further experiments as hereinafter described.

### Example 2: Use of filter for purification of water

Various bound filter blocks (dome shape) were prepared using the modified LDH of Example 1, mixed with varying levels of activated carbon. The blocks were prepared by standard process involving mixing the ingredients with binder, putting it in appropriately sized moulds, compression and heat treatment followed by de-moulding.

Each filter was subjected to lifetime study with Arsenic removal as the tested parameter. Model test water containing 300 ppb Arsenic (V) was prepared and its total dissolved solids was 750 ppm and pH was 7.0 to 7.5. Some experiments were also carried out with loose bed (i.e. unbound material). For comparative analysis, some further experiments were carried out with a bound block containing naturally occurring (i.e. not modified) LDH, which contains Magnesium and Aluminium at 160 grams and activated carbon of 80 grams and 50 grams polyethylene binder. During the experiments, flow rate of input water was maintained at 80 to 200 ml/minute.

Details of the composition of various filter blocks which were tested are shown in table 1 and the data is shown in table 2.

**TABLE 1**

| Composition | 1 | 2 | 3 | 4 | 5^{#} | Comparative | | |
|---|---|---|---|---|---|---|---|---|
| | | | | | | 1 | 2 | 3 |
| LDH of Example 1 (grams) | 140 | 190 | 165 | 190 | 200 | 160* | 90^ | 0 |
| Activated carbon (grams) | 70 | 0 | 600 | 210 | 0 | 80 | 160 | 180 |
| Binder (grams) | 45 | 48 | 78 | 44 | 0 | 50 | 50 | 30 |
| LDH of Example 1 (wt/%) | 55 | 80 | 20 | 43 | 100 | 55 | 30 | |
| Activated carbon (wt/%) | 28 | 0 | 70 | 47 | 0 | 28 | 53 | |
| Binder/wt% | balance | balance | balance | balance | Nil | balance | balance | 300 |

| | | | | | | | | |
|---|---|---|---|---|---|---|---|---|
| *this was natural LDH, not modified LDH ^this was powdered LDH (non granulated) but chemical formula was as per Example 1 ^{#}this was filled in a cartridge. It was not a bound block | | | | | | | | |

**TABLE 2**

| Volume of input water /litres | Filter | | | | | Comparative | |
|---|---|---|---|---|---|---|---|
| Arsenic concentration at output/ppb | 1 | 2 | 3 | 4 | 5 | 1 | 2 |
| 100 | 1.0 | 3.0 | 0.1 | 1.0 | 1.0 | 40 | 3 |
| 200 | 0.4 | 1.0 | 0.1 | 1.5 | 8.0 | 140 | 7 |
| 400 | 0.3 | 7.0 | 9.0 | 6.0 | 9.8 | - | - |
| 600 | 8.5 | 8.0 | 9.0 | - | - | - | - |
| 800 | 7.5 | 5.0 | 3.0 | - | - | - | - |
| 1000 | 6.0 | - | - | - | - | - | - |
| 1200 | 7.0 | - | - | - | - | - | - |

| | Filter | | | | | Comparative | |
|---|---|---|---|---|---|---|---|
| | 1 | 2 | 4 | 4 | 5 | 1 | 2 |
| Zinc concentration of output water at 400 litres in ppm | <0.05 | <0.05 | <0.05 | <0.05 | <0.05 | <0.05 | 10 |
| Aluminium concentration of output water at 400 litres in ppm | <0.05 | <0.05 | <0.05 | <0.05 | <0.05 | <0.05 | 1.3 |

| | | | | | | | |
|---|---|---|---|---|---|---|---|
| Note : (1) MCL of Zinc is 5 ppm : (2) MCL of Aluminium is 0.2 ppm | | | | | | | |

The data in table 2, read along with formulations of all the compositions described in table 1, indicate that natural (unmodified) LDH [Comparative 1] is good enough only for 100 litres of input water. The Arsenic content of water passed through natural LDH was unacceptably high at 40 ppb. Similarly, the data for ungranulated but modified LDH [Comparative 2] indicates that while the material was efficacious as against Arsenic, its performance vis-a-vis maintaining Zinc and Aluminium levels below the MCL limits was unacceptable.

On the other hand, the modified material of Example 1, *per-se* in unbound form was efficacious enough for as much as 400 litres of input water (Filter 5). The material was equally effective in a bound form without a second filter medium (Filter 2).

The modified LDH material was even more efficacious in the form of a composition of filter media containing a second filter medium of activated carbon at varying levels and a binder.

It is pertinent to note that the modified LDH material, in all its various forms, provided pure water containing minimal amount of not only Arsenic but also residual Zinc and Aluminium.

## Claims

1. A layered double hydroxide of the general formula [(M²⁺)₁₋ₓ(M³⁺)ₓ(OH)₂]^{x+}(Aⁿ⁻)_{x/n·}mH₂O, where, M²⁺ is Zn²⁺, Cu²⁺, Fe²⁺ or Ca²⁺; M³⁺ is Al³⁺ or Fe³⁺ and Aⁿ⁻ is CO₃²⁻, OH⁻, Cl⁻, NO₃⁻, SO₄²⁻ or PO4³⁻, "x" is in the range of 0.05 to 0.5, "n" is in the range of 1 to 10, and "m" is in the range of 0 to 10; wherein said layered double hydroxide is granular having particle size in the range of 50 µm to 2000 µm and wherein molar ratio of M²⁺: M³⁺ is in the range of 2:1 to 4:1.

2. A layered double hydroxide as claimed in claim 1 wherein its Arsenic (V) adsorption capacity is at least 9 mg/g.

3. A composition of filter media for purification of water, said composition comprising a first filter medium as claimed in claim 1 and a second filter medium which is activated carbon, sand, diatomaceous earth, calcium carbonate, activated alumina, ferric oxide or titanium oxide.

4. A composition of filter media as claimed in claim 3 comprising 5 to 100% of said first filter medium, balance being said second filter medium.

5. A composition as claimed in claim 3 or 4 further comprising a binder.

6. A method for making a layered double hydroxide as claimed in claim 1 comprising the steps of:
(i) mixing, in any order, an acidic solution of a compound comprising at least one of Zn²⁺, Cu²⁺, Fe²⁺ or Ca²⁺ with an acidic solution of compound comprising at least one of Al³⁺ or Fe³⁺ and an alkaline solution comprising at least one of CO₃²⁻, OH⁻, Cl⁻, NO₃⁻, SO4² or PO₄³⁻ to form a precipitate;
(ii) filtering said precipitate;
(iii) washing said precipitate with water to get a layered double hydroxide as shown in the general formula of claim 1;
(iv) granulating said layered double hydroxide; and,
(v) separating granules of minimum particle size of 50 µm from finer particles.

7. Use of a layered double hydroxide as claimed in claim 1 to reduce Arsenic content of impure water from 300 ppb to ≤10 ppb.

8. Use of a composition of filter media as claimed in claim 5 to reduce Arsenic content of impure water from 300 ppb to ≤10 ppb.

## Patentansprüche

1. Geschichtetes Doppelhydroxid der allgemeinen Formel [(M²⁺)₁₋ₓ (M³⁺)ₓ(OH)₂]^{x+}(Aⁿ⁻)_{x/n}·mH₂O, worin M²⁺ Zn²⁺, Cu²⁺, Fe²⁺ oder Ca²⁺ ist, M³⁺ Al³⁺ oder Fe³⁺ ist und Aⁿ⁻ CO₃²⁻, OH⁻, Cl⁻, NO₃⁻, SO₄²⁻ oder PO₄³⁻ ist, "x" in dem Bereich von 0,05 bis 0,5 liegt, "n" in dem Bereich von 1 bis 10 liegt und "m" in dem Bereich von 0 bis 10 liegt, wobei das geschichtete Doppelhydroxid granuliert vorliegt und eine Partikelgröße in dem Bereich von 50 µm bis 2000 µm aufweist und wobei das Molverhältnis von M²⁺:M³⁺ in dem Bereich von 2:1 bis 4:1 liegt.

2. Geschichtetes Doppelhydroxid, wie im Anspruch 1 beansprucht, wobei die Arsen (V)-Adsorptionskapazität mindestens 9 mg/g beträgt.

3. Zusammenstellung von Filtermedien zum Reinigen von Wasser, wobei die Zusammenstellung ein erstes Filtermedium, wie im Anspruch 1 beansprucht, und ein zweites Filtermedium, welches Aktivkohle, Sand, Diatomeenerde, Calciumcarbonat, aktiviertes Aluminiumoxid, Eisen(III)-Oxid oder Titanoxid darstellt, umfasst.

4. Zusammenstellung von Filtermedien, wie im Anspruch 3 beansprucht, die 5 bis 100% des ersten Filtermediums umfasst, wobei das zweite Filtermedium den Rest darstellt.

5. Zusammenstellung, wie im Anspruch 3 oder 4 beansprucht, die ferner ein Bindemittel umfasst.

6. Verfahren zur Herstellung eines geschichteten Doppelhydroxids, wie im Anspruch 1 beansprucht, umfassend die Schritte:
(i) Mischen, in beliebiger Folge, einer sauren Lösung einer Verbindung, umfassend mindestens eines von Zn²⁺, Cu²⁺, Fe²⁺ oder Ca²⁺, mit einer sauren Lösung einer Verbindung, umfassend mindestens eines von Al³⁺ oder Fe³⁺, und einer alkalischen Lösung, umfassend mindestens eines von CO₃²⁻, OH⁻, Cl⁻, NO₃⁻, SO₄²⁻ oder PO4³⁻, um eine Ausfällung zu bilden,
(ii) Filtern der Ausfällung,
(iii) Waschen der Ausfällung mit Wasser, um ein geschichtetes Doppelhydroxid, wie in der allgemeinen Formel von Anspruch 1 gezeigt, zu erhalten,
(iv) Granulieren des geschichteten Doppelhydroxids und
(v) Abtrennen von Granalien einer Mindestpartikelgröße von 50 µm von feineren Partikeln.

7. Verwendung eines geschichteten Doppelhydroxids, wie im Anspruch 1 beansprucht, zur Senkung des Arsen-Gehalts von unsauberem Wasser von 300 ppb auf ≤ 10 ppb.

8. Verwendung einer Zusammenstellung von Filtermedien, wie im Anspruch 5 beansprucht, zur Senkung des Arsen-Gehalts von unsauberem Wasser von 300 ppb auf ≤ 10 ppb.

## Revendications

1. Hydroxyde à double couche de la formule générale [(M²⁺)₁₋ₓ(M³⁺)ₓ(OH)₂]^{x+}(Aⁿ⁻)_{x/n}•mH₂O, où, M²⁺ est Zn²⁺, CU²⁺, Fe²⁺, ou Ca²⁺; M³⁺ est Al³⁺ ou Fe³⁺ et Aⁿ⁻ est CO₃²⁻, OH⁻, Cl⁻, NO₃⁻, SO₄²⁻ ou PO4³⁻, "x" se trouve dans l'intervalle de 0,05 à 0,5, "n" se trouve dans l'intervalle de 1 à 10, et "m" se trouve dans l'intervalle de 0 à 10 ; dans lequel ledit hydroxyde à double couche est granulaire ayant une taille de particule dans l'intervalle de 50 µm à 2 000 µm et dans lequel le rapport molaire de M²⁺:M³⁺ se trouve dans l'intervalle de 2:1 à 4:1.

2. Hydroxyde à double couche selon la revendication 1, dans lequel sa capacité d'adsorption d'arsenic (V) est d'au moins 9 mg/g.

3. Composition de milieux de filtres pour une purification d'eau, ladite composition comprenant un premier milieu de filtre selon la revendication 1 et un second milieu de filtre qui est du charbon actif, du sable, de la diatomite, du carbonate de calcium, de l'alumine active, de l'oxyde ferrique ou de l'oxyde de titane.

4. Compositions de milieux de filtres selon la revendication 3 comprenant de 5 à 100 % dudit premier milieu de filtre, le reste étant ledit second milieu de filtre.

5. Composition selon la revendication 3 ou 4 comprenant de plus un liant.

6. Procédé de fabrication d'un hydroxyde à double couche selon la revendication 1 comprenant les étapes de :
(i) mélange, dans un ordre quelconque, d'une solution acide d'un composé comprenant au moins un de Zn²⁺, CU²⁺, Fe²⁺, ou Ca²⁺ avec une solution acide de composé comprenant au moins un de Al³⁺ ou Fe³⁺ et une solution alcaline comprenant au moins un de CO₃²⁻, OH⁻, Cl⁻, NO₃⁻, SO4² ou PO₄³⁻ pour former un précipité ;
(ii) filtration dudit précipité ;
(iii) lavage dudit précipité avec de l'eau pour fournir un hydroxyde à double couche comme représenté dans la formule générale de la revendication 1 ;
(iv) granulation dudit hydroxyde à double couche ; et,
(v) séparation de granulés de taille de particule de minimum de 50 µm à partir de particules plus fines ;

7. Utilisation d'un hydroxyde à double couche selon la revendication 1 pour réduire une teneur en arsenic d'eau impure de 300 ppb à ≤ 10 ppb.

8. Utilisation d'une composition de milieux de filtres selon la revendication 5 pour réduire une teneur en arsenic d'eau impure de 300 ppb à ≤ 10 ppb.
